# EUROPEAN PATENT APPLICATION

(11) **EP 1 198 088 A1**
(43) Date of publication of application: **17.04.2002**
(21) Application number: 01915822.9
(22) Date of filing: 27.03.2001
(51) Int. Cl.: H04J 11/00, H04J 1/00

(54) **MULTI-CARRIER COMMUNICATION APPARATUS AND MULTI-CARRIER COMMUNICATION METHOD**

(30) Priority: 29.05.2000 JP 2000158561
(71) Applicant: MATSUSHITA ELECTRIC INDUSTRIAL CO., LTD., Kadoma-shi, Osaka 571-8501 (JP)
(72) Inventor: KITAGAWA, Keiichi, Yokosuka-shi, Kanagawa 239-0847 (JP); SUMASU, Atsushi, Yokosuka-shi, Kanagawa 239-0833 (JP); KATO, Osamu, Yokosuka-shi, Kanagawa 237-0066 (JP)
(74) Representative: Grünecker, Kinkeldey, Stockmair & Schwanhäusser Anwaltssozietät
(86) International application number: JP0102461
(87) International publication number: WO0193478

(57) **Abstract**

A serial/parallel converter 101 converts a single stream of transmit data to a plurality of streams of transmit data, outputs first-stream transmit data and fourth-stream transmit data to error correction coding sections 102 and 103, respectively, and outputs second-stream transmit data and third-stream transmit data to an IFFT section 106. The IFFT section 106 generates an OFDM signal using the second-stream transmit data and third-stream transmit data, together with first-stream and fourth-stream transmit data that has undergone error correction coding processing. A peak detector 107 detects peak power of the generated OFDM signal. If the detected peak power exceeds a threshold value, the IFFT section 106 re-generates an OFDM signal using a peak suppression signal from a peak suppression signal generator 108 instead of first-stream and fourth-stream transmit data.

## Description

### Technical Field

The present invention relates to a multicarrier transmission method communication apparatus, and more particularly to a multicarrier transmission method communication apparatus that suppresses peak power.

### Background Art

A multicarrier transmission method communication apparatus has been described in IEICE Technical Report RCS99-144. (1999-11) "Peak Power Suppression with Parity Carrier for Multi-carrier Transmission". An above conventional multicarrier transmission method communication apparatus will be described below.

A drawback of a multicarrier transmission method is that peak power with respect to average power increases in proportion to the number of carriers. Consequently, the influence of nonlinear distortion in a power amplifier becomes greater, and out-of-band spectral emission increases.

In order to solve this problem, at the time peak power exceeding a particular threshold value appears, a compensation signal with the opposite phase of the multicarrier signal is generated, and a multicarrier signal is generated by assigning this signal to a specific carrier (a carrier provided separately from carriers for transmitting information signals) called a compensation carrier (parity carrier).

By this means it is possible to suppress peak power of a multicarrier signal.

However, in a communication apparatus in the above-described conventional multicarrier transmission method, the following problem is found. Namely, although assigning a compensation signal on a compensation carrier enables multicarrier signal peak power to be suppressed, the total number of carriers for transmitting information signals decreases to a corresponding extent. That is to say, a compensation carrier can be said to be a carrier that contributes to suppression of peak power but does not contribute to information transmission. As a result, with a communication apparatus in the above-described conventional multicarrier transmission method, there is a problem that transmission efficiency is decreased.

### Disclosure of Invention

It is an object of the present invention to provide a multicarrier communication apparatus that suppresses peak power while suppressing a decrease in transmission efficiency.

The present inventors came to devise the present invention by noting that it is possible for a carrier wave for transmitting only a signal to suppress peak power to be used as a carrier wave for transmitting information signals when peak power that exceeds a threshold value does not occur in a multicarrier signal, and finding that it is possible to suppress the decrease in transmission efficiency by using all carrier waves for information signal transmission when peak power that exceeds a threshold value does not occur in a multicarrier signal.

The object of the present invention is achieved by superimposing information signals on all carrier waves when peak power does not occur in a multicarrier signal, and superimposing a signal for suppressing peak power instead of an information signal on a specific carrier wave among all carrier waves when peak power occurs in a multicarrier signal.

### Brief Description of Drawings

FIG.1 is a block diagram showing a configuration of a transmitting apparatus provided with a multicarrier communication apparatus according to Embodiment 1 of the present invention;
FIG.2 is a block diagram showing configuration of a receiving apparatus that performs radio communications with a transmitting apparatus provided with a multicarrier communication apparatus according to Embodiment 1 of the present invention;
FIG.3A is a schematic diagram showing an example of the format of transmit data input to the IFFT section in a transmitting apparatus provided with a multicarrier communication apparatus according to Embodiment 1 of the present invention;
FIG.3B is a schematic diagram showing an example of the format of transmit data input to the IFFT section in a transmitting apparatus provided with a multicarrier communication apparatus according to Embodiment 1 of the present invention;
FIG.4 is a block diagram showing configuration of a transmitting apparatus provided with a multicarrier communication apparatus according to Embodiment 2 of the present invention;
FIG.5 is a block diagram showing a configuration of a transmitting apparatus provided with a multicarrier communication apparatus according to Embodiment 3 of the present invention;
FIG.6 is a block diagram showing a configuration of a receiving apparatus that performs radio communications with a transmitting apparatus provided with a multicarrier communication apparatus according to Embodiment 3 of the present invention; and
FIG.7 is a block diagram showing a configuration of a transmitting apparatus provided with a multicarrier communication apparatus according to Embodiment 4 of the present invention.

### Best Mode for Carrying out the Invention

With reference now to the accompanying drawings, embodiments of the present invention will be explained in detail below. In the following embodiments, the descriptions refer to an example in which the number of subcarriers used is four.

### (Embodiment 1)

In this embodiment, subcarriers that transmit only peak suppression signals on a fixed basis and subcarriers that transmit only information signals are not provided, but instead, subcarriers that transmit both peak suppression signals and information signals and subcarriers that transmit information signals are provided.

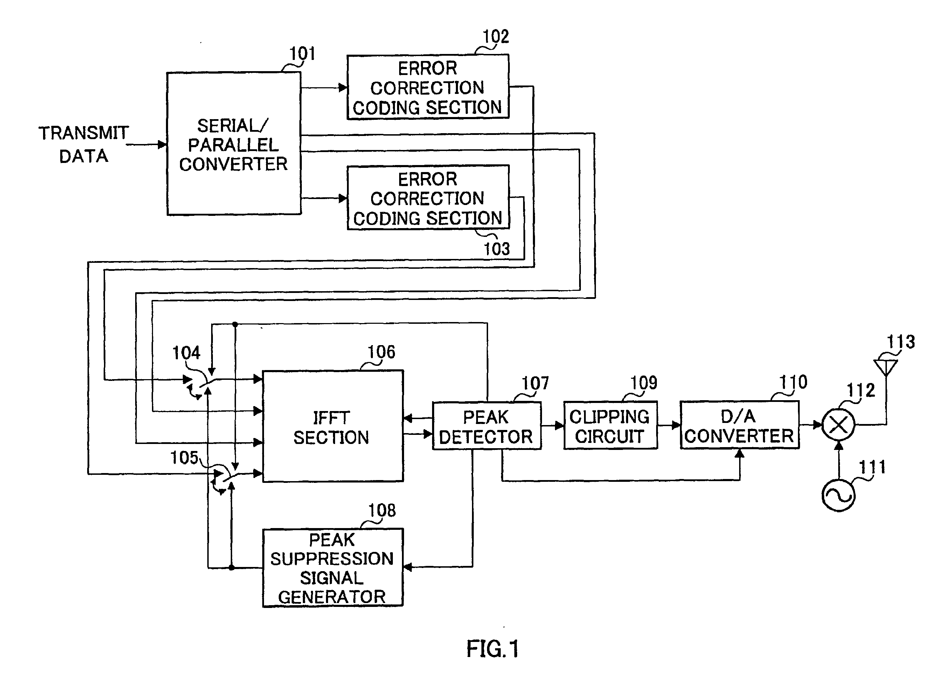

FIG.1 is a block diagram showing the configuration of a transmitting apparatus provided with a multicarrier communication apparatus according to Embodiment 1 of the present invention. In FIG.1, a serial/parallel (hereinafter referred to as "S/P") converter 101 converts a single stream of transmit data into a plurality of streams of transmit data (four streams here as an example). The number of streams is equivalent to the total number of carriers. Here, for convenience, the transmit data of the plurality of streams shown in FIG.1 is referred to in order from top to bottom as first-stream to fourth-stream transmit data.

The S/P converter 101 sends standard-rate transmit data to an Inverse Fast Fourier Transform (hereinafter referred to as "IFFT") section 106 as second-stream transmit data and third-stream transmit data. The S/P converter 101 also sends low-rate transmit data as first-stream transmit data and fourth-stream transmit data to an error correction coding section 102 and error correction coding section 103, respectively.

Error correction coding section 102 and error correction coding section 103 carry out predetermined error correction coding processing on first-stream transmit data and second-stream transmit data, respectively, and send transmit data that has undergone error correction coding processing to a switch 104 and switch 105, respectively.

A peak suppression signal generator 108 performs generation of a peak suppression signal for switch 104 and switch 105 based on a detection result from a peak detector 107 described later herein. Details of the peak suppression signal will be described later herein.

Switch 104 is subjected to control by the peak detector 107 described later herein, and outputs first-stream transmit data from error correction coding section 102 or the peak suppression signal from the peak suppression signal generator 108 to the IFFT section 106. Similarly, switch 105 is subjected to control by the peak detector 107 described later herein, and outputs fourth-stream transmit data from error correction coding section 103 or a peak suppression signal from the peak suppression signal generator 108 to the IFFT section 106.

The IFFT section 106 is subjected to control by the peak detector 107 described later herein, and performs frequency division multiplexing processing by carrying out IFFT (inverse fast Fourier transform) processing per symbol basis using first-stream transmit data through fourth-stream transmit data, or using second-stream transmit data and third-stream transmit data and two peak suppression signals.

By means of this frequency division multiplexing processing, the IFFT section 106 generates an OFDM signal (multicarrier signal) in which first-stream transmit data through fourth-stream transmit data are superimposed on subcarriers, or an OFDM signal (multicarrier signal) in which second-stream transmit data and third-stream transmit data and two peak suppression signals are superimposed on subcarriers, on a symbol-by-symbol basis, and sends the generated symbol-basis OFDM signal to the peak detector 107. In order to simplify the description, the subcarrier on which first-stream transmit data or a peak suppression signal is superimposed will be designated "the first subcarrier", the subcarrier on which second-stream transmit data is superimposed will be designated "the second subcarrier", the subcarrier on which third-stream transmit data is superimposed will be designated "the third subcarrier", and the subcarrier on which fourth-streamtransmit data or a peak suppression signal is superimposed will be designated "the fourth subcarrier".

The peak detector 107 measures the power of the OFDM signal from the IFFT section 106 for each symbol, and detects, on the OFDM signal for each symbol, whether or not peak power that exceeds a threshold value occurs. If peak power exceeding the threshold value has not occurred in the OFDM signal, the peak detector 107 sends this OFDM signal of the symbol in which peak power has not occurred to a D/A converter 110.

If peak power exceeding the threshold value has occurred in the OFDM signal, the peak detector 107 temporarily stores this OFDM signal for the symbol in which peak power has occurred, and also controls the IFFT section 106, peak suppression signal generator 108, switch 104, and switch 105, in the following way.

First, the peak detector 107 controls the IFFT section 106 so as to re-generate an OFDM signal for the symbol in which peak power exceeding the threshold value occurred. In addition, the peak detector 107 controls the peak suppression signal generator 108 so as to generate a peak suppression signal.

The peak detector 107 also controls switch 104 so that the peak suppression signal from the peak suppression signal generator 108 is output to the IFFT section 106 instead of first-stream transmit data from error correction coding section 102, and controls switch 105 so that the peak suppression signal from the peak suppression signal generator 108 is output to the IFFT section 106 instead of fourth-stream transmit data from error correction coding section 103.

By this means, it is possible for an OFDM signal for a symbol having peak power exceeding a threshold value to be re-generated by the peak detector 107 using second-stream transmit data, third-stream transmit data, and two peak suppression signals. The above-described second-stream transmit data and third-stream transmit data used by the IFFT section 106 are the same as the second-stream transmit data and third-stream transmit data for the symbol in which peak power occurred, respectively.

If peak power exceeding the threshold value still occurs in the OFDM signal re-generated by the IFFT section 106, the peak detector 107 causes the peak suppression signal generator 108 to generate a peak suppression signal, and also controls the IFFT section 106 so that re-generation of an OFDM signal for the symbol in which peak power occurred is continued, until a first repetition count reaches a stipulated number. At this time, when the first repetition count reaches the stipulated number, the peak detector 107 sends the temporarily stored OFDM signal for the relevant symbol to a clipping circuit 109.

The clipping circuit 109 performs clipping processing on an OFDM signal from the peak detector 107, and sends the OFDM signal that has undergone clipping processing to the D/A converter 110.

The D/A converter 110 performs D/A conversion processing on the OFDM signal from the peak detector 107 or clipping circuit 109, converting the OFDM signal to an analog signal.

A multiplier 112 performs modulation processing on the OFDM signal that has been converted to an analog signal by multiplying the OFDM signal converted to an analog signal by a local signal from an oscillator 111. After undergoing modulation processing, the OFDM signal is transmitted to the communicating party via an antenna 113.

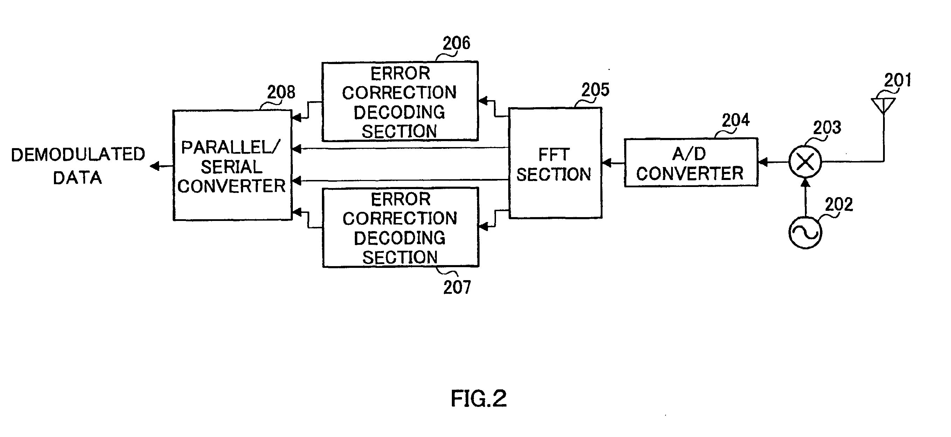

FIG.2 is a block diagram showing the configuration of a receiving apparatus that performs radio communications with a transmitting apparatus provided with a multicarrier communication apparatus according to Embodiment 1 of the present invention. In FIG.2, a signal transmitted by a communicating party is received by an antenna 201. This communicating party has the configuration shown in FIG.1.

A multiplier 203 multiplies a signal received by the antenna 201 (received signal) by a local signal from an oscillator 202 to generate a demodulated signal. An A/D converter 204 performs A/D conversion processing on the demodulated signal from the multiplier 203, thereby converting the demodulated signal to a digital signal.

A Fast Fourier Transform (hereinafter referred to as "FFT") section 205 extracts the signal transmitted by each subcarrier (that is, the first subcarrier through fourth subcarrier) by carrying out FFT (Fast Fourier Transform) processing on the demodulated signal that has been converted to a digital signal. In order to simplify the description, the signals transmitted by means of the first subcarrier through fourth subcarrier will be designated "first demodulated signal" through "fourth demodulated signal", respectively.

The FFT section 205 sends the first demodulated signal and fourth demodulated signal to an error correction decoding section 206 and error correction decoding section 207, respectively, and sends the second demodulated signal and third demodulated signal to a parallel/serial (hereinafter referred to as "P/S") converter 208.

Error correction decoding section 206 performs error correction decoding processing on the first demodulated signal, and sends the first demodulated signal that has undergone error correction decoding processing to the P/S converter 208. Error correction decoding section 207 performs error correction decoding processing on the fourth demodulated signal, and sends the fourth demodulated signal that has undergone error correction decoding processing to the P/S converter 208. The error correction decoding processing used by error correction decoding section 206 and error correction decoding section 207 corresponds to the error correction coding processing used by the communicating party.

The P/S converter 208 converts the plurality of streams of demodulated signals (that is, the first demodulated signal and fourth demodulated signal that have undergone error correction decoding processing, and the second demodulated signal and third demodulated signal) to a single stream of demodulated data.

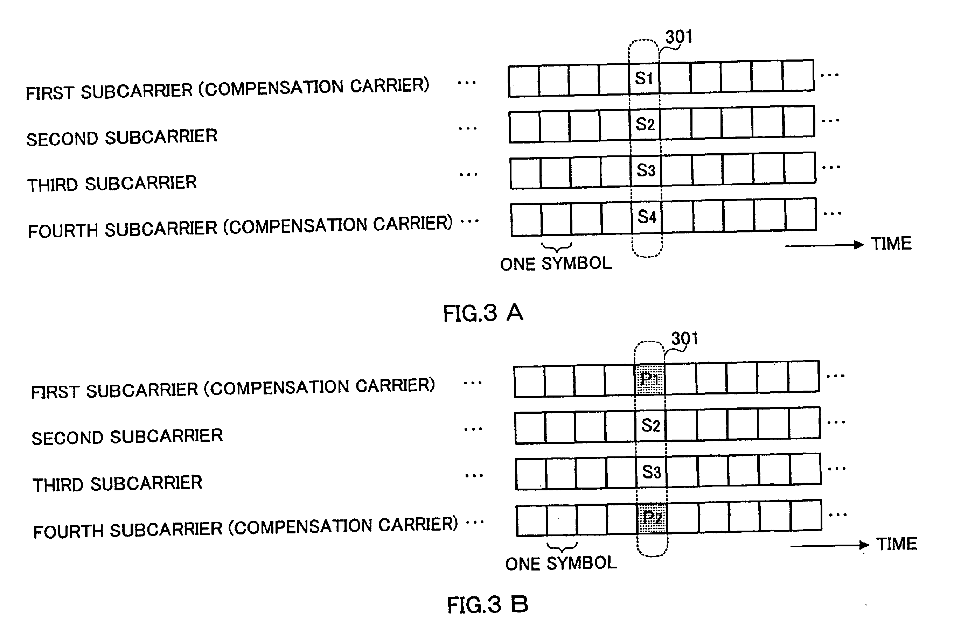

Next, the operation of a transmitting apparatus provided with a multicarrier communication apparatus according to this embodiment, and the operation of a receiving apparatus that performs radio communications with this transmitting apparatus, will be described with reference to FIG.1 and FIG.2, and also to FIG.3 (a) and FIG.3 (b). FIG.3 (a) and FIG.3 (b) are schematic diagrams showing examples of the format of transmit data input to the IFFT section 106 in a transmitting apparatus provided with a multicarrier communication apparatus according to Embodiment 1 of the present invention.

In FIG.1, a single stream of transmit data is converted to first-stream transmit data through fourth-stream transmit data by the S/P converter 101. Second-stream transmit data and third-stream transmit data are sent to the IFFT section 106 with their information transmission speed as the standard rate. First-stream transmit data and fourth-stream transmit data are sent to the error correction coding section 102 and error correction coding section 103, respectively, with their information transmission speed as a low rate. The reason for using a lower rate for first-stream transmit data and fourth-stream transmit data than for second-stream transmit data and third-stream transmit data is to ensure that the rate of first-stream transmit data and fourth-stream transmit data after error correction coding processing is the same as the rate of second-stream transmit data and third-stream transmit data.

First-stream transmit data and fourth-stream transmit data undergo predetermined error correction coding processing by error correction coding section 102 and error correction coding section 103, respectively. As the aforesaid predetermined error correction coding processing it is possible to use error correction coding processing that employs a block code (hamming code, BCH code, Reed-Solomon code, fire code, etc.), or to use error correction coding processing that employs a convolutional code (turbo code, auto-orthogonal code, Hagelbarger code, Iwadare code, etc.).

First-stream transmit data and fourth-stream transmit data that have undergone error correction coding processing by error correction coding section 102 and error correction coding section 103 are sent to switch 104 and switch 105, respectively. As a result of this error correction coding processing, the rate of first-stream transmit data and fourth-stream transmit data that have undergone error correction coding processing becomes equal to the rate of second-stream transmit data and third-stream transmit data.

When this apparatus is in the normal state (when peak power that exceeds a threshold value has not been detected by the peak detector 107 in an OFDM signal generated by the IFFT section 106), switch 104 and switch 105 are controlled by the peak detector 107 so as to output, respectively, first-stream transmit data from error correction coding section 102 and fourth-stream transmit data from error correction coding section 103 to the IFFT section 106. Consequently, first-stream through fourth-stream transmit data is input to the IFFT section 106. First-stream through fourth-stream transmit data input to the IFFT section 106 all has the same rate (see FIG.3 (a)).

In the IFFT section 106, IFFT processing (that is, frequency division multiplexing processing) using first-stream through fourth-stream transmit data is carried out. As a result of this frequency division multiplexing processing, an OFDM signal is generated in which first-stream transmit data through fourth-stream transmit data are superimposed, respectively, on the first subcarrier through fourth subcarrier. The generated OFDM signal is sent to the peak detector 107.

In the peak detector 107, the power of the OFDM signal from the IFFT section 106 is measured on a symbol-by-symbol basis, and detection is carried out as to whether or not peak power exceeding a threshold value has occurred in the OFDM signal for each symbol.

If peak power exceeding the threshold value has not occurred in the OFDM signal from the IFFT section 106, this OFDM signal for a symbol in which peak power has not occurred is sent to the D/A converter 110.

If, on the other hand, peak power exceeding the threshold value has occurred in the OFDM signal from the IFFT section 106, this OFDM signal for a symbol in which peak power has occurred is stored temporarily, and the apparatus switches from the normal state to a peak suppression state. For example, referring to FIG.3 (a), if peak power exceeding the threshold value occurs in the OFDM signal for symbol 301, the OFDM signal for symbol 301 is temporarily stored and the apparatus switches from the normal state to the peak suppression state. The OFDM signal for symbol 301 has been generated by IFFT processing using signal "S1" through signal "S4" respectively as the first-stream through fourth-stream signals.

When the apparatus switches to the peak suppression state, the following processing is carried out. Acontrol signal is sent from the peak detector 107 to the IFFT section 106 to have re-generation of the OFDM signal for the symbol in which peak power exceeded the threshold value performed. In addition, a control signal is sent from the peak detector 107 to the peak suppression signal generator 108 to have a peak suppression signal output to switch 104 and switch 105.
Peak detector 107 outputs to peak suppression signal generator 108 a control signal to instruct the generator 108 to output a peak suppression signal to switch 104 and switch 105.
Also, a control signal is sent from the peak detector 107 to switch 104 to have the peak suppression signal from the peak suppression signal generator 108 output to the IFFT section 106 instead of first-stream transmit data from error correction coding section 102, and a control signal is sent from the peak detector 107 to switch 105 to have the peak suppression signal from the peak suppression signal generator 108 output to the IFFT section 106 instead of fourth-stream transmit data from error correction coding section 103.

On receiving an above-described control signal from the peak detector 107, the peak suppression signal generator 108 performs generation of a peak suppression signal to switch 104 and switch 105.

The peak suppression signals generated by the peak detector 107 in this case are as follows. Appropriate (random) signals are generated as signals to replace first-stream transmit data and fourth-stream transmit data. The peak suppression signals output to switch 104 and switch 105 may be the same signal or different signals. According to the scale of the IFFT section 106, these appropriate signals may be selected from (1) a signal of unlimited amplitude and phase, (2) a signal of limited amplitude, (3) a signal of limited phase, (4) a signal of limited amplitude and phase, and so forth.

When (4) is used as a peak suppression signal (that is, when a QPSK or similar signal of limited amplitude and phase is used), in particular, if the total number of subcarriers is small it is possible to compute IFFT computation results offline beforehand, and store these computation results as a look-up table. By using this look-up table, IFFT computation results can be readily obtained according to the signal input to the IFFT section 106. Consequently, the amount of processing in the IFFT section 106 can be reduced, and the scale of circuitry of the IFFT section 106 can be made smaller.

When (2) or (3) is used as a peak suppression signal, also, signals input to the IFFT section 106 are limited, and therefore the computing element that performs IFFT computations can be simplified, and it is also possible to compute IFFT computation results offline beforehand. Consequently, the scale of circuitry of the IFFT section can be made smaller.

In this embodiment, a procedure is used whereby an OFDM signal is generated using an appropriate (random) signal as a peak suppression signal, and if peak power that exceeds a threshold value still occurs in the generated OFDM signal, an OFDM signal is generated using a different appropriate (random) signal from that aforementioned as a peak suppression signal.

As a result, peak suppression signals are input to the IFFT section 106 instead of first-stream transmit data and fourth-stream transmit data together with second-stream transmit data and third-stream transmit data. For example, referring to FIG.3 (b), in order to generate an OFDM signal for above-described symbol 301, peak suppression signal "P1" and peak suppression signal "P2" are input to the IFFT section 106 instead of signal "S1" and signal "S4", respectively, together with signal "S2" and signal "S3". Signal "S2" and signal "S3" are the same as signal "S2" and signal "S3", respectively, input to the IFFT section 106 in the above-described normal state (FIG.3 (a)).

In the IFFT section 106, it is recognized from a control signal from the peak detector 107 that the apparatus has switched to the peak suppression state. As a result, in the IFFT section 106 an OFDM signal for the symbol in which peak power exceeded the threshold value (symbol 301) is re-generated by the peak detector 107. That is, an OFDM signal is generated in which a peak suppression signal is superimposed on the first subcarrier and fourth subcarrier, and second-stream transmit data and third-stream transmit data are superimposed on the second subcarrier and third subcarrier, respectively. For example, referring to FIG.3 (b), an OFDM signal is generated in which peak suppression signal "P1" and peak suppression signal "P2" are superimposed on the first subcarrier and fourth subcarrier, respectively, and signal "S2" and signal "S3" are superimposed on the second subcarrier and third subcarrier, respectively.

Here, the peak suppression signals input to the IFFT section 106 are appropriate (random) signals, and so are signals having a possibility of suppressing the peak power of the OFDM signal generated by the IFFT section 106. Therefore, there is a possibility that the OFDM signal re-generated by the IFFT section 106 will be a signal with its peak power suppressed.

For the OFDM signal re-generated by the IFFT section 106, the peak detector 107 detects whether or not peak power exceeding the threshold value has occurred, as described above. If peak power exceeding the threshold value has not occurred in the re-generated OFDM signal, this re-generated OFDM signal is sent to the D/A converter 110.

If, on the other hand, peak power exceeding the threshold value still occurs in the re-generated OFDM signal, a control signal is sent from the peak detector 107 to the IFFT section 106 to have re-generation of the OFDM signal for that symbol carried out, and a control signal is sent again from the peak detector 107 to the peak suppression signal generator 108 to have a peak suppression signal output to switch 104 and switch 105. At this time, the first repetition count for OFDM signal re-generation is incremented in the peak detector 107.

On receiving this control signal, the peak suppression signal generator 108 again performs generation of a peak suppression signal to switch 104 and switch 105. At this time, an appropriate signal different from the above-mentioned appropriate signal is generated as a peak suppression signal.

As a result, in the IFFT section 106 an OFDM signal is re-generated for a symbol in which peak power exceeding the threshold value occurred by the peak detector 107 using new peak suppression signals, and, as described above, detection is performed for the re-generated OFDM signal by the peak detector 107 as to whether or not peak power exceeding the threshold value has occurred.

Thereafter, the above-described kind of re-generation of an OFDM signal for the same symbol is repeated, replacing the peak suppression signals by different appropriate signals, until peak power exceeding the threshold value no longer occurs in the re-generated OFDM signal. However, if the first repetition count reaches a stipulated value, the OFDM signal temporarily stored by the peak detector 107 is sent to the clipping circuit 109.

This temporarily stored OFDM signal is subjected to clipping processing by the clipping circuit 109. Methods that can be used for clipping processing in the clipping circuit 109 include cutting power at or above the threshold value in the OFDM signal, and bringing the OFDM signal power below the threshold value by lowering the overall level of the OFDM signal.

An OFDM signal that has undergone clipping processing is sent to the D/A converter 110. As a result, the apparatus switches from the peak suppression state to the normal state.

In the D/A converter 110, the OFDM signal from the peak detector 107 or clipping circuit 109 undergoes D/A conversion processing that converts it to an analog signal. The OFDM signal that has been converted to an analog signal undergoes modulation processing by being multiplied by a local signal from an oscillator 111 in the multiplier 112. After undergoing modulation processing, the OFDM signal is transmitted to the receiving apparatus via the antenna 113.

In FIG.2, a signal transmitted by a transmitting apparatus provided with a multicarrier communication apparatus according to this embodiment is received by the antenna 201. A demodulated signal is generated by multiplying a signal received by the antenna 201 (received signal) by a local signal from the oscillator 202 in the multiplier 203. The generated demodulated signal is converted to a digital signal by being subjected to A/D conversion processing by the A/D converter 204.

The demodulated signal that has been converted to a digital signal undergoes FFT processing by the FFT section 205, whereby the signals transmitted by means of the first subcarrier through fourth subcarrier are extracted. That is, the first demodulated signal through fourth demodulated signal are extracted by the FFT section 205. In this embodiment, the extracted first demodulated signal through fourth demodulated signal correspond to the signals superimposed by means of the first subcarrier through fourth subcarrier, respectively, shown in FIG.3 (b).

The first demodulated signal and fourth demodulated signal contain a peak suppression signal in a symbol for which peak power exceeding the threshold value occurs in the OFDM signal. For example, referring to FIG.3 (b), the first demodulated signal and fourth demodulated signal contain a peak suppression signal, not a normal information signal, in symbol 301. For the receiving apparatus, these peak suppression signals are unnecessary interference signal components. Therefore, there is a possibility that the first demodulated signal and fourth demodulated signal will, left as they are, be signals containing an error.

Thus the first demodulated signal and fourth demodulated signal are sent to error correction decoding section 206 and error correction decoding section 207, respectively. The second demodulated signal and third demodulated signal are sent to the P/S converter 208.

The first demodulated signal and fourth demodulated signal undergo error correction decoding processing by error correction decoding section 206 and error correction decoding section 207, respectively. As a result, the part corresponding to the peak suppression signal in the first demodulated signal and fourth demodulated signal is corrected to an appropriate signal. For example, referring to FIG.3 (a) and FIG.3 (b), by means of error correction processing, signal "P1" and signal "P2" in the first demodulated signal are corrected to the respective information signals which are not subjected to the error correction coding in the transmitting apparatus. After error correction processing, the first demodulated signal and fourth demodulated signal are sent to the P/S converter 208.

In the P/S converter 208, the second demodulated signal and third demodulated signal, together with the first demodulated signal and fourth demodulated signal that have undergone error correction decoding processing, are converted to a single stream of decoded data. This concludes the description of the operation of a transmitting apparatus provided with a multicarrier communication apparatus according to this embodiment, and the operation of a receiving apparatus that performs radio communications with this transmitting apparatus.

Thus, in this embodiment, subcarriers that transmit only peak suppression signals on a fixed basis and subcarriers that transmit only information signals are not provided, but instead, compensation subcarriers that transmit both peak suppression signals and information signals and information subcarriers that transmit information signals are provided.

Also, in the normal state, a normal-rate information signal is superimposed on an information subcarrier, while a signal for which error correction coding processing has been executed on an information signal that has a lower rate than the normal rate is superimposed on a compensation subcarrier. In the peak suppression state, on the other hand, a peak suppression signal is superimposed on a compensation subcarrier, while the same kind of information signal as in the normal state is superimposed on an information subcarrier.

According to this kind of configuration, in the peak suppression state it is possible to effectively suppress peak power in an OFDM signal by superimposing peak suppression signals on compensation subcarriers, and in the normal state it is possible to suppress a drop in transmission efficiency by superimposing information signals on all subcarriers (information subcarriers and compensation subcarriers).

Moreover, although, in the case of peak suppression, a signal transmitted by means of a compensation subcarrier contains a peak suppression signal (that is, an erroneous signal), not an information signal, the information signal superimposed on this compensation subcarrier is subjected to error correction coding processing. Consequently, a signal transmitted by means of a compensation carrier becomes a signal in which the erroneous part (the peak suppression signal part) has been corrected by execution of error correction decoding processing by the receiving side apparatus. That is to say, an information signal superimposed on a compensation subcarrier is received in good condition by the receiving side apparatus.

As described above, according to this embodiment, it is possible to provide a multicarrier communication apparatus that suppresses peak power while suppressing a drop in transmission efficiency.

In this embodiment a case where the number of subcarriers used is four has been described as an example, but there is no limit on the number of subcarriers used. Also, in this embodiment a case where two compensation subcarriers on which information signals and peak suppression signals are superimposed are used (in this embodiment, the first subcarrier and fourth subcarrier) has been described as an example, but it is possible to change the number of compensation subcarriers according to various conditions such as the situation regarding peak power suppression by means of peak suppression signals.

### (Embodiment 2)

In this embodiment, subcarriers that transmit only peak suppression signals on a fixed basis and subcarriers that transmit only information signals are not provided, but instead, only subcarriers for transmitting information signals are provided, and a predetermined number of these subcarriers are used as subcarriers on which transmission of information signals is halted when peak power that exceeds a threshold value occurs in an OFDM signal.

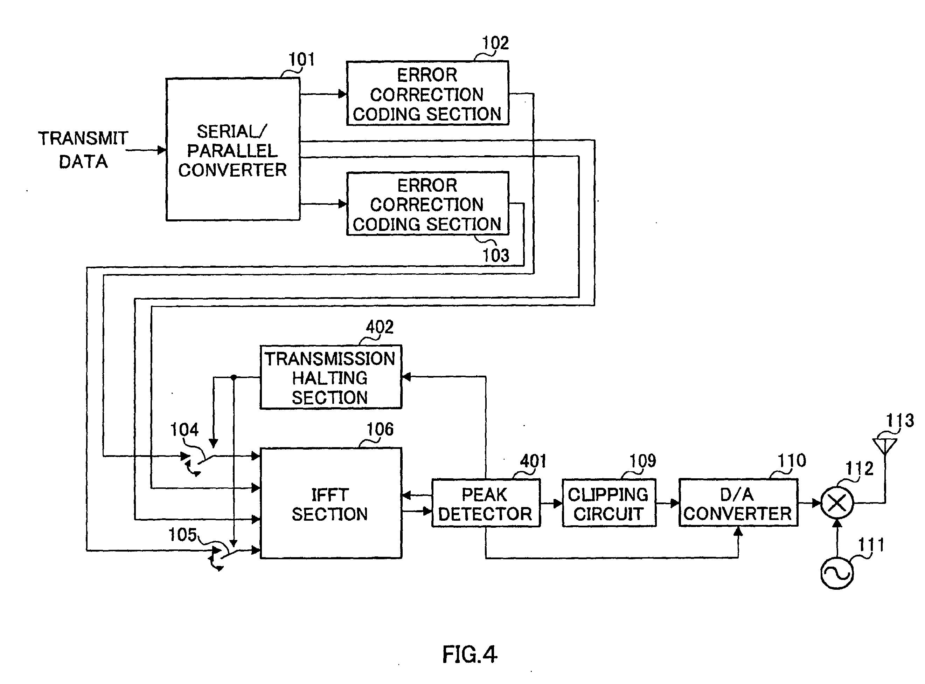

A transmitting apparatus provided with a multicarrier communication apparatus according to this embodiment will be described below with reference to FIG.4. FIG.4 is a block diagram showing the configuration of a transmitting apparatus provided with a multicarrier communication apparatus according to Embodiment 2 of the present invention. Parts in FIG.4 identical to those in Embodiment 1 (FIG.1) are assigned the same codes as in FIG.1 and their detailed explanations are omitted.

In FIG.4, a peak detector 401, in the same way as the peak detector 107 in Embodiment 1, measures the power of an OFDM signal from the IFFT section 106 for each symbol, and detects, for the OFDM signal in each symbol, whether or not peak power that exceeds a threshold value occurs. This peak detector 401 differs from the peak detector 107 in Embodiment 1 in the following respect.

If peak power exceeding the threshold value occurs in the OFDM signal, the peak detector 401 temporarily stores this OFDM signal for the symbol in which peak power occurred, notifies a transmission halting section 402 that peak power exceeding the threshold value has occurred, and controls the IFFT section 106 so as to re-generate an OFDM signal for the symbol in which peak power exceeded the threshold value.

When the transmission halting section 402 recognizes from the notification from the peak detector 401 that peak power exceeding the threshold value has occurred in an OFDM signal, it controls switch 104 so as to halt output of first-stream transmit data from error correction coding section 102 to the IFFT section 106, and also controls switch 105 so as to halt output of fourth-stream transmit data from error correction coding section 103 to the IFFT section 106.

If peak power exceeding the threshold value still occurs in the OFDM signal re-generated by the IFFT section 106, the peak detector 401 sends the temporarily stored OFDM signal for the relevant symbol to the clipping circuit 109.

The configuration of a receiving apparatus that performs radio communications with a transmitting apparatus provided with a multicarrier communication apparatus according to this embodiment is the same as that described in Embodiment 1 (FIG.2), and a detailed description thereof will be omitted here.

Next, the operation of a transmitting apparatus provided with a multicarrier communication apparatus according to this embodiment will be described with reference again to FIG.4. When this apparatus is in the normal state, switch 104 and switch 105 are controlled by the transmission halting section 402 so as to output, respectively, first-stream transmit data from error correction coding section 102 and fourth-stream transmit data from error correction coding section 103 to the IFFT section 106.

In the IFFT section 106, IFFT processing (that is, frequency division multiplexing processing) using first-stream through fourth-stream transmit data is carried out. As a result of this frequency division multiplexing processing, an OFDM signal is generated in which first-stream transmit data through fourth-stream transmit data are superimposed, respectively, on the first subcarrier through fourth subcarrier. The generated OFDM signal is sent to the peak detector 401.

In the peak detector 401, the power of the OFDM signal from the IFFT section 106 is measured for each symbol, and detection is carried out as to whether or not peak power exceeding a threshold value has occurred in the OFDM signal for each symbol.

If peak power exceeding the threshold value has not occurred in the OFDM signal from the IFFT section 106, this OFDM signal for a symbol in which peak power has not occurred is sent to the D/A converter 110.

If, on the other hand, peak power exceeding the threshold value has occurred in the OFDM signal from the IFFT section 106, this OFDM signal for a symbol in which peak power has occurred is stored temporarily, and the apparatus switches from the normal state to a peak suppression state.

When the apparatus switches to the peak suppression state, the following processing is carried out. Acontrol signal is sent from the peak detector 401 to the IFFT section 106 to have re-generation of the OFDM signal for the symbol in which peak power exceeded the threshold value performed.

In addition, the transmission halting section 402 is notified by the peak detector 401 of the fact that peak power exceeding the threshold value has occurred in the OFDM signal. Consequently, switch 104 is controlled by the transmission halting section 402 so as to halt output of first-stream transmit data from error correction coding section 102 to the IFFT section 106. Similarly, switch 105 is controlled by the transmission halting section 402 so as to halt output of fourth-stream transmit data from error correction coding section 103 to the IFFT section 106.

As a result, an OFDM signal for a symbol in which peak power exceeding the threshold value occurred is generated by the peak detector 401 with only second-stream transmit data and third-stream transmit data input in the IFFT section 106. That is to say, an OFDM signal is generated in which second-stream transmit data and third-stream transmit data are superimposed, respectively, on only the second subcarrier and third subcarrier.

Here, no signals whatever are superimposed on the first subcarrier and fourth subcarrier. In other words, It can be said that a signal with an amplitude of generally zero is multiplexed on the first subcarrier and fourth subcarrier. Thus, the number of subcarriers on which an information signal is superimposed is reduced from four to two. Therefore, an OFDM signal re-generated by the IFFT section 106 has peak power suppressed.

As described above, detection is performed by the peak detector 401 for an OFDM signal re-generated by the IFFT section 106 as to whether or not peak power exceeding the threshold value has occurred. If peak power exceeding the threshold value has not occurred in a re-generated OFDM signal, this re-generated OFDM signal is sent to the D/A converter 110. If, on the other hand, peak power exceeding the threshold value still occurs in the re-generated OFDM signal, the above-mentioned temporarily stored OFDM signal is sent to the clipping circuit 109. The apparatus then switches from the peak suppression state to the normal state.

Details of the clipping circuit 109 and D/A converter 110 are the same as for Embodiment 1.A modulated OFDM signal transmitted by a transmitting apparatus provided with a multicarrier communication apparatus according to this embodiment is received by the receiving apparatus shown in FIG.2 via the antenna 113.

Referring to FIG.2, as described in Embodiment 1, signals transmitted by means of the first subcarrier through fourth subcarrier are extracted by performing FFT processing on the (a) demodulated signal that has been converted to a digital signal subjected to FFT processing in the FFT section 205.That is, the first demodulated signal through fourth demodulated signal are extracted by the FFT section 205.

The first demodulated signal and fourth demodulated signal transmitted by means of the first subcarrier and fourth subcarrier, respectively, contain an error in a symbol for which peak power exceeding the threshold value occurs in the OFDM signal. Therefore, there is a possibility that the first demodulated signal and fourth demodulated signal will, left as they are, be signals containing an error.

Thus the first demodulated signal and fourth demodulated signal are sent to error correction decoding section 206 and error correction decoding section 207, respectively, and undergo error correction decoding processing. As a result, the erroneous part in the first demodulated signal and fourth demodulated signal is corrected to an appropriate signal.

Thus, in this embodiment, subcarriers that transmit only peak suppression signals on a fixed basis and subcarriers that transmit only information signals are not provided, but instead, only information subcarriers for transmitting information signals are provided, and a predetermined number of specific subcarriers among these subcarriers are used as subcarriers on which transmission of information signals is halted when peak power that exceeds a threshold value occurs in an OFDM signal.

Also, in the normal state, a signal for which error correction coding processing has been executed on an information signal that has a lower rate than the normal rate is superimposed on a specific subcarrier, while a normal-rate information signal is superimposed on an information subcarrier other than a specific subcarrier. In the peak suppression state, on the other hand, information signals are not superimposed on specific subcarriers, but are superimposed only on other information subcarriers.

According to this kind of configuration, in the peak suppression state it is possible to effectively suppress peak power in an OFDM signal by not superimposing information signals on specific carriers, and in the normal state it is possible to suppress a drop in transmission efficiency by superimposing information signals on all subcarriers.

Moreover, although, in the case of peak suppression, a signal transmitted by means of a specific subcarrier does not contain an information signal, an information signal superimposed on this specific subcarrier is subjected to error correction coding processing. Consequently, a signal transmitted by means of this specific carrier becomes a signal in which the erroneous part (the part on which an information signal is not superimposed) has been corrected by execution of error correction decoding processing by the receiving side apparatus. That is to say, an information signal superimposed on a specific subcarrier is received in good condition by the receiving side apparatus.

As described above, according to this embodiment, it is possible to provide a multicarrier communication apparatus that suppresses peak power while suppressing a drop in transmission efficiency.

In this embodiment a case where the number of subcarriers used is four has been described as an example, but there is no limit on the number of subcarriers used. Also, in this embodiment a case where the number of specific subcarriers on which information signal transmission is halted when peak power exceeding a threshold value occurs is two has been described as an example, but it is possible to change the number of specific subcarriers according to various conditions such as the situation regarding peak power suppression by halting information signal transmission.

### (Embodiment 3)

In this embodiment, subcarriers that transmit only peak suppression signals on a fixed basis and subcarriers that transmit only information signals are not provided, but instead, all subcarriers are provided as subcarriers that can transmit both peak suppression signals and information signals, and moreover, in the normal state information signals are superimposed on all subcarriers, while in the peak suppression state peak suppression signals are superimposed on a subcarrier selected from among all the subcarriers.

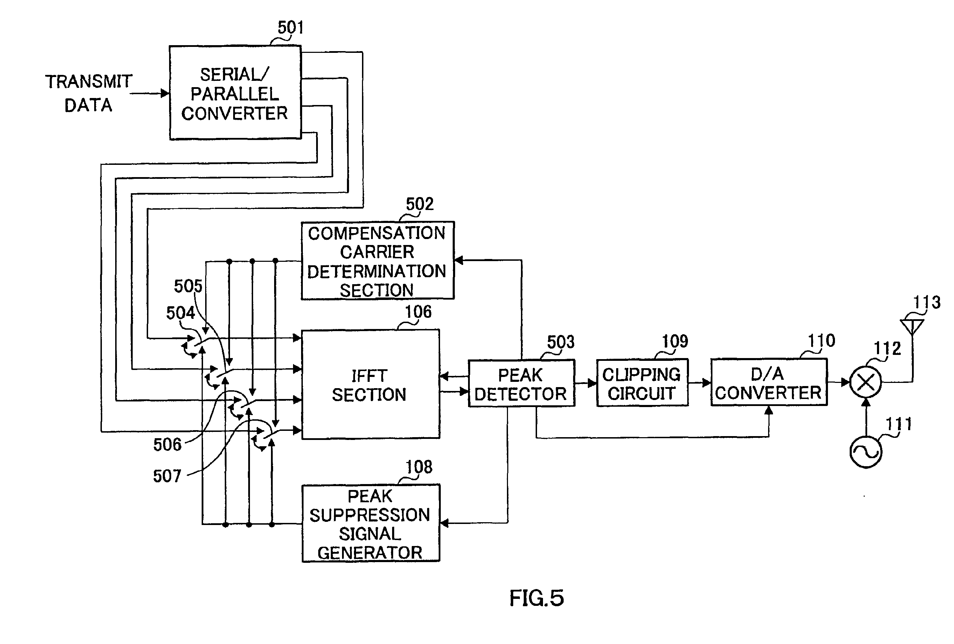

A transmitting apparatus provided with a multicarrier communication apparatus according to this embodiment will be described below with reference to FIG.5. FIG.5 is a block diagram showing the configuration of a transmitting apparatus provided with a multicarrier communication apparatus according to Embodiment 3 of the present invention. Parts in FIG.5 identical to those in Embodiment 1 (FIG.1) are assigned the same codes as in FIG.1 and their detailed explanations are omitted.

In FIG.5, an S/P converter 501 converts a single stream of transmit data into a plurality of streams of transmit data (four streams here as an example), in the same way as the S/P converter 101 in Embodiment 1. Here, for convenience, the transmit data of the plurality of streams shown in FIG.5 is referred to in order from top to bottom as first-stream to fourth-stream transmit data. The S/P converter 501 sends first-stream through fourth-stream transmit data to switch 504 through switch 507, respectively, all as transmit data with the same rate.

A peak detector 503, in the same way as the peak detector 107 in Embodiment 1, measures the power of an OFDM signal from the IFFT section 106 for each symbol, and detects, for the OFDM signal in each symbol, whether or not peak power that exceeds a threshold value occurs.

If peak power exceeding the threshold value does not occur in the OFDM signal, the peak detector 503 sends this OFDM signal for a symbol in which peak power has not occurred to the D/A converter 110.

If peak power exceeding the threshold value occurs in the OFDM signal, the peak detector 503 temporarily stores this OFDM signal for a symbol in which peak power occurred, notifies a compensation carrier determination section 502 that peak power exceeding the threshold value has occurred, controls the IFFT section 106 so as to re-generate an OFDM signal for the symbol in which peak power exceeded the threshold value, and controls the peak suppression signal generator 108 so as to generate a peak suppression signal.

If peak power exceeding the threshold value still occurs in the OFDM signal re-generated by the IFFT section 106, the peak detector 503 causes the peak suppression signal generator 108 to generate a peak suppression signal, and also controls the IFFT section 106 so that re-generation of an OFDM signal for the symbol in which peak power occurred is continued, until a second repetition count reaches a stipulated number. At this time, when the second repetition count reaches the stipulated number, the peak detector 503 sends the temporarily stored OFDM signal for the relevant symbol to the clipping circuit 109.

The compensation carrier determination section 502 performs switching control for switch 504 through switch 507 in accordance with the notification from the peak detector 503-that is, according to whether or not peak power exceeding the threshold value has occurred in the OFDM signal generated by the IFFT section 106.

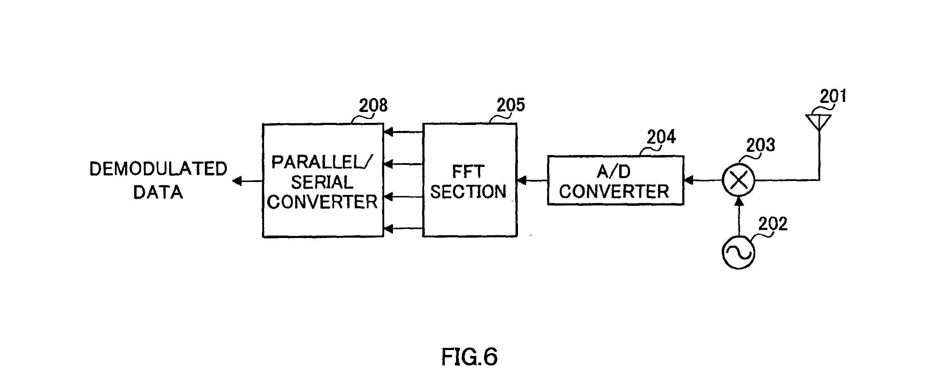

FIG.6 is a block diagram showing the configuration of a receiving apparatus that performs radio communications with a transmitting apparatus provided with a multicarrier communication apparatus according to Embodiment 3 of the present invention. Parts in FIG.6 identical to those in Embodiment 1 (FIG.2) are assigned the same codes as in FIG.2 and their detailed explanations are omitted. In FIG.6, unlike Embodiment 1, the first demodulated signal through fourth demodulated signal extracted by the FFT section 205 are all sent to the P/S converter 208 without undergoing error correction decoding processing.

Next, the operation of a transmitting apparatus provided with a multicarrier communication apparatus according to this embodiment will be described with reference again to FIG.5. When this apparatus is in the normal state, switch 504 through switch 507 are controlled by the compensation carrier determination section 502 so as to output first-stream through fourth-stream transmit data from the S/P converter 501 to the IFFT section 106.

In the IFFT section 106, IFFT processing (that is, frequency division multiplexing processing) using first-stream through fourth-stream transmit data is carried out. As a result of this frequency division multiplexing processing, an OFDM signal is generated in which first-stream transmit data through fourth-stream transmit data are superimposed, respectively, on the first subcarrier through fourth subcarrier. The generated OFDM signal is sent to the peak detector 503.

In the peak detector 503, the power of the OFDM signal from the IFFT section 106 is measured for each symbol, and detection is carried out as to whether or not peak power exceeding a threshold value has occurred in the OFDM signal for each symbol.

If peak power exceeding the threshold value has not occurred in the OFDM signal from the IFFT section 106, this OFDM signal for a symbol in which peak power has not occurred is sent to the D/A converter 110.

If, on the other hand, peak power exceeding the threshold value has occurred in the OFDM signal from the IFFT section 106, this OFDM signal for a symbol in which peak power has occurred is stored temporarily, and the apparatus switches from the normal state to a peak suppression state.

When the apparatus switches to the peak suppression state, the following processing is carried out. Acontrol signal is sent from the peak detector 503 to the IFFT section 106 to have re-generation of the OFDM signal for the symbol in which peak power exceeded the threshold value performed, and a control signal is sent from the peak detector 503 to the peak suppression signal generator 108 to have a peak suppression signal generated.

On receiving the above-described control signal, the peak suppression signal generator 108 performs generation of a peak suppression signal to switch 504 through switch 507. This peak suppression signal is of the same kind as that in Embodiment 1, and a detailed description thereof will be omitted here.

In addition, the compensation carrier determination section 502 is notified by the peak detector 503 of the fact that peak power exceeding the threshold value has occurred in the OFDM signal generated by the IFFT section 106.

On receiving this notification, the compensation carrier determination section 502 performs control so that one of switches 504 through 507 (here, for example, switch 504) outputs the peak suppression signal from the peak suppression signal generator 108 to the IFFT section 106 instead of first-stream transmit data.

Following this, an OFDM signal for the symbol in which peak power exceeding the threshold value occurred in the peak detector 503 is generated by the IFFT section 106. That is to say, an OFDM signal is generated in which a peak suppression signal is superimposed on the first subcarrier, and second-stream transmit data through fourth-stream transmit data are superimposed, respectively, on the second subcarrier through fourth subcarrier. The effect due to the peak suppression signal in IFFT computation is of the same kind as in Embodiment 1, and a detailed description thereof will be omitted here.

For the OFDM signal re-generated by the IFFT section 106, the peak detector 503 detects whether or not peak power exceeding the threshold value has occurred, as described above. If peak power exceeding the threshold value has not occurred in the re-generated OFDM signal, this re-generated OFDM signal is sent to the D/A converter 110.

If, on the other hand, peak power exceeding the threshold value still occurs in the re-generated OFDM signal, a control signal is again sent from the peak detector 503 to the IFFT section 106 to have re-generation of the OFDM signal for the above-described symbol carried out, and a control signal is sent again from the peak detector 503 to the peak suppression signal generator 108 to have a peak suppression signal output to switch 504 through switch 507. At this time, the first repetition count for OFDM signal re-generation is incremented in the peak detector 503.

On receiving this control signal, the peak suppression signal generator 108 again performs generation of a peak suppression signal to switch 504 through switch 507. At this time, an appropriate signal different from the above-mentioned appropriate signal is generated as a peak suppression signal.

As a result, in the IFFT section 106 an OFDM signal is re-generated for a symbol in which peak power exceeding the threshold value occurred by the peak detector 503 with a new peak suppression signal superimposed on the first subcarrier, and, as described above, detection is performed for the re-generated OFDM signal by the peak detector 503 as to whether or not peak power exceeding the threshold value has occurred.

Thereafter, the above-described kind of re-generation of an OFDM signal for the same symbol is repeated, replacing the peak suppression signal by a different appropriate signal, until peak power exceeding the threshold value no longer occurs in the re-generated OFDM signal. However, if the first repetition count reaches a stipulated value, a control signal is again sent from the peak detector 503 to the IFFT section 106 to have re-generation of the OFDM signal for the above-described symbol carried out, and the compensation carrier determination section 502 is again notified by the peak detector 503 of the fact that peak power exceeding the threshold value has occurred in the OFDM signal. At this time, the second repetition count for OFDM signal re-generation is incremented, and the first repetition count is reset, in the peak detector 503.

On receiving this notification, the compensation carrier determination section 502 performs control so that, this time, one of switches 505 through 507, but not switch 504, (here, for example, switch 505) outputs the peak suppression signal from the peak suppression signal generator 108 to the IFFT section 106 instead of second-stream transmit data.

Following this, the above-described kind of OFDM signal re-generation is performed by the IFFT section 106, and, as described above, detection is performed for the re-generated OFDM signal by the peak detector 503 as to whether or not peak power exceeding the threshold value has occurred.

Thereafter, the above-described kind of re-generation of an OFDM signal for the same symbol is repeated, replacing the peak suppression signal by a different appropriate signal, until peak power exceeding the threshold value no longer occurs in the re-generated OFDM signal. However, if the first repetition count reaches a stipulated value, a control signal is again sent from the peak detector 503 to the IFFT section 106 to have re-generation of the OFDM signal for the above-described symbol carried out, and the compensation carrier determination section 502 is again notified by the peak detector 503 of the fact that peak power exceeding the threshold value has occurred in the OFDM signal. At this time, the second repetition count for OFDM signal re-generation is incremented, and the first repetition count is reset, in the peak detector 503.

Following this, the above-described kind of OFDM signal re-generation is repeated, changing the switch that outputs a peak suppression signal instead of an information signal, until peak power exceeding the threshold value no longer occurs in the re-generated OFDM signal. However, if the second repetition count reaches a stipulated value, the OFDM signal temporarily stored in the peak detector 503 is sent to the clipping circuit 109. The apparatus then switches from the peak suppression state to the normal state.

A post-modulation-processing OFDM signal transmitted by a transmitting apparatus provided with a multicarrier communication apparatus according to this embodiment is received by the receiving apparatus shown in FIG.6 via the antenna 113.

Referring to FIG.6, as described in Embodiment 1, signals transmitted by means of the first subcarrier through fourth subcarrier are extracted by having a demodulated signal that has been converted to a digital signal subjected to FFT processing in the FFT section 205. That is, the first demodulated signal through fourth demodulated signal are extracted by the FFT section 205.

Among the first demodulated signal through fourth demodulated signal transmitted by means of the first subcarrier through fourth subcarrier, respectively, there is a possibility of the presence of a signal that contains an error (peak suppression signal) in a symbol for which peak power exceeding the threshold value occurred in the OFDM signal. However, when a certain number of errors are permitted ( for example, when transmit data input to the S/P converter 501 in the transmitting apparatus shown in FIG.5 has already undergone error correction coding), after these first through fourth demodulated signals have been converted to a single signal stream by the P/S converter 208, they become demodulated data capable of being reproduced by undergoing error correction decoding processing.

Thus, in this embodiment, subcarriers that transmit only peak suppression signals on a fixed basis and subcarriers that transmit only information signals are not provided, but instead, all subcarriers are provided as subcarriers that can transmit both peak suppression signals and information signals.

Moreover, in the normal state information signals are superimposed on all subcarriers, while in the peak suppression state a peak suppression signal is superimposed on one or other of the subcarriers and information signals are superimposed on the other subcarriers.

According to this kind of configuration, in the peak suppression state it is possible to effectively suppress peak power in an OFDM signal by superimposing a peak suppression signal on one or other of the subcarriers, and in the normal state it is possible to suppress a drop in transmission efficiency by superimposing information signals on all subcarriers.

In this embodiment a case where the number of subcarriers used is four has been described as an example, but there is no limit on the number of subcarriers used. Also, in this embodiment a case has been described, as an example, where the number of subcarriers on which a peak suppression signal is superimposed at the time of OFDM signal re-generation is one, but it is also possible for the number of subcarriers on which a peak suppression signal is superimposed to be two or more. In this case, peak power in an OFDM signal can be further suppressed.

Moreover, in this embodiment, a case has been described, as an example, where, when an OFDM signal is re-generated, subcarriers on which a peak suppression signal is to be superimposed are selected sequentially, and an OFDM signal for which peak power does not exceed a threshold value is sent to a D/A converter 110, but the present invention is not limited to this, and it is also possible for OFDM signals re-generated with peak suppression signals superimposed on all the subcarriers to be stored, and the OFDM signal with the lowest peak power among the stored OFDM signals to be sent to the D/A converter 110. By this means it is possible to suppress OFDM signal peak power to the utmost, and minimize the effect of linear distortion in a power amplifier.

### (Embodiment 4)

In this embodiment, subcarriers that transmit only peak suppression signals on a fixed basis and subcarriers that transmit only information signals are not provided, but instead, all subcarriers are provided as subcarriers that transmit only information signals, and moreover, in the normal state information signals are superimposed on all subcarriers, while in the peak suppression state information signal transmission is halted on a subcarrier selected from among all the subcarriers.

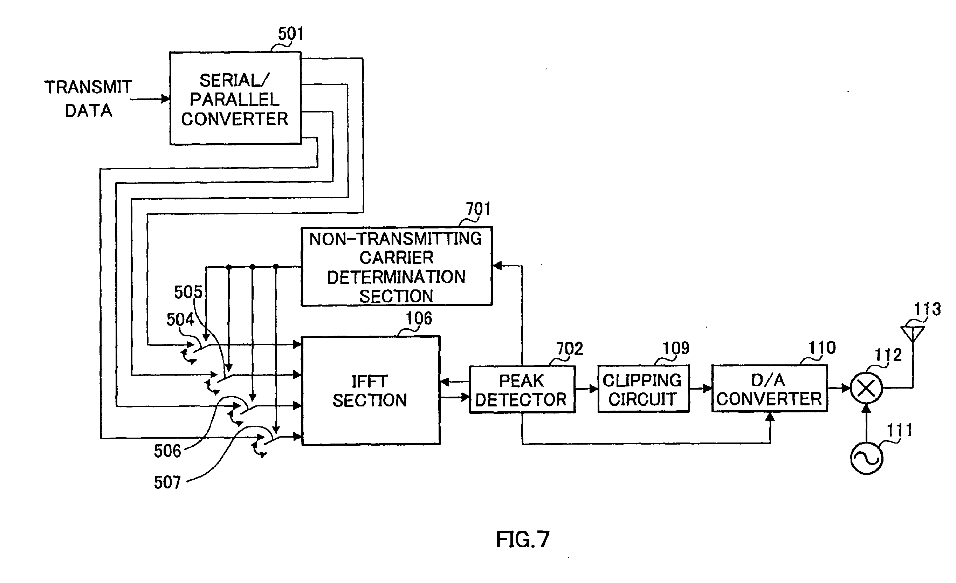

A transmitting apparatus provided with a multicarrier communication apparatus according to this embodiment will be described below with reference to FIG.7. FIG.7 is a block diagram showing the configuration of a transmitting apparatus provided with a multicarrier communication apparatus according to Embodiment 4 of the present invention. Parts in FIG.7 identical to those in Embodiment 1 (FIG.1) are assigned the same codes as in FIG.1 and their detailed explanations are omitted.

In FIG.7, a peak detector 702, in the same way as the peak detector 107 in Embodiment 1, measures the power of an OFDM signal from the IFFT section 106 for each symbol, and detects, for the OFDM signal in each symbol, whether or not peak power that exceeds a threshold value occurs.

If peak power exceeding the threshold value does not occur in the OFDM signal, the peak detector 702 sends this OFDM signal for a symbol in which peak power has not occurred to the D/A converter 110.

If peak power exceeding the threshold value occurs in the OFDM signal, the peak detector 702 temporarily stores this OFDM signal for a symbol in which peak power occurred, notifies a non-transmitting carrier determination section 701 that peak power exceeding the threshold value has occurred, and controls the IFFT section 106 so as to re-generate an OFDM signal for the symbol in which peak power exceeding the threshold value occurred.

If peak power exceeding the threshold value still occurs in the OFDM signal re-generated by the IFFT section 106, the peak detector 702 notifies the non-transmitting carrier determination section 701 that peak power exceeding the threshold value has occurred, and also controls the IFFT section 106 so that re-generation of an OFDM signal for the symbol in which peak power occurred is continued, until a first repetition count reaches a stipulated number. At this time, when the first repetition count reaches the stipulated number, the peak detector 702 sends the temporarily stored OFDM signal for the relevant symbol to the clipping circuit 109.

The non-transmitting carrier determination section 701 performs switching control for switch 504 through switch 507 in accordance with the notification from the peak detector 702-that is, according to whether or not peak power exceeding the threshold value has occurred in the OFDM signal generated by the IFFT section 106.

The configuration of a receiving apparatus that performs radio communications with a transmitting apparatus provided with a multicarrier communication apparatus according to this embodiment is the same as that described in Embodiment 3 (FIG.6), and a detailed description thereof will be omitted here.

Next, the operation of a transmitting apparatus provided with a multicarrier communication apparatus according to this embodiment will be described with reference again to FIG.7. The operation of this apparatus when in the normal state is similar to that in Embodiment 3, except that switch 504 through switch 507 are controlled by the non-transmitting carrier determination section 701 so as to output first-stream through fourth-stream transmit data from the S/P converter 501 to the IFFT section 106.

When the apparatus switches to the peak suppression state, the following processing is carried out. Acontrol signal is sent from the peak detector 702 to the IFFT section 106 to have re-generation of the OFDM signal for the symbol in which peak power exceeded the threshold value performed, and the non-transmitting carrier determination section 701 is notified by the peak detector 702 of the fact that peak power exceeding the threshold value has occurred in the OFDM signal generated by the IFFT section 106.

On receiving this notification, the non-transmitting carrier determination section 701 performs control so that one of switches 504 through 507 (here, for example, switch 504) halts output of first-stream transmit data to the IFFT section 106.

Following this, an OFDM signal for the symbol in which peak power exceeding the threshold value occurred in the peak detector 702 is generated by the IFFT section 106. That is to say, an OFDM signal is generated in which second-stream transmit data through fourth-stream transmit data are superimposed, respectively, on the second subcarrier through fourth subcarrier. Here, no signal whatever is superimposed on the first subcarrier. In other words, it can be said that a signal with an amplitude of generally zero is multiplexed on the first subcarrier.

For the OFDM signal re-generated by the IFFT section 106, the peak detector 702 detects whether or not peak power exceeding the threshold value has occurred, in the same way as in Embodiment 1. If peak power exceeding the threshold value has not occurred in the re-generated OFDM signal, this re-generated OFDM signal is sent to the D/A converter 110. If, on the other hand, peak power exceeding the threshold value still occurs in the re-generated OFDM signal, a control signal is again sent from the peak detector 702 to the IFFT section 106 to have re-generation of the OFDM signal for the above-described symbol carried out, and the non-transmitting carrier determination section 701 is again notified by the peak detector 702 of the fact that peak power exceeding the threshold value has occurred in the OFDM signal generated by the IFFT section 106. At this time, the first repetition count for OFDM signal re-generation is incremented in the peak detector 702.

On receiving this notification, the non-transmitting carrier determination section 701 performs control so that, this time, one of switches 505 through 507, but not switch 504, (here, for example, switch 505) halts output of second-stream transmit data to the IFFT section 106.

Following this, the above-described kind of OFDM signal re-generation is performed by the IFFT section 106, and, as described above, detection is performed for the re-generated OFDM signal by the peak detector 702 as to whether or not peak power exceeding the threshold value has occurred.

Thereafter, the above-described kind of re-generation of an OFDM signal for the same symbol is repeated, changing the switch that halts the output of information signal to the IFFT section 106, until peak power exceeding the threshold value no longer occurs in the re-generated OFDM signal. However, if the above-mentioned first repetition count reaches a stipulated value, the OFDM signal temporarily stored in the peak detector 702 is sent to the clipping circuit 109. The apparatus then switches from the peak suppression state to the normal state.

A post-modulation-processing OFDM signal transmitted by a transmitting apparatus provided with a multicarrier communication apparatus according to this embodiment is received by the receiving apparatus shown in FIG.6 via the antenna 113.

Referring to FIG.6, as described in Embodiment 1, signals transmitted by means of the first subcarrier through fourth subcarrier are extracted by having a demodulated signal that has been converted to a digital signal subjected to FFT processing in the FFT section 205. That is, the first demodulated signal through fourth demodulated signal are extracted by the FFT section 205.

Among the first demodulated signal through fourth demodulated signal transmitted by means of the first subcarrier through fourth subcarrier, respectively, there is a possibility of the presence of a signal that does not contain an information signal in a symbol for which peak power exceeding the threshold value occurred in the OFDM signal. However, when a certain number of errors are permitted (for example, when transmit data input to the S/P converter 501 in the transmitting apparatus shown in FIG.7 has already undergone error correction coding), after these first through fourth demodulated signals have been converted to a single signal stream by the P/S converter 208, they become demodulated data capable of being reproduced by undergoing error correction decoding processing.

Thus, in this embodiment, subcarriers that transmit only peak suppression signals on a fixed basis and subcarriers that transmit only information signals are not provided, but instead, all subcarriers are provided as subcarriers that transmit only information signals.

Moreover, in the normal state information signals are superimposed on all subcarriers, while in the peak suppression state information signal transmission is halted on a subcarrier selected from among all the subcarriers.

According to this kind of configuration, in the peak suppression state it is possible to effectively suppress peak power in an OFDM signal by halting information signal transmission on one or other of the subcarriers, and in the normal state it is possible to suppress a drop in transmission efficiency by superimposing information signals on all subcarriers.

In this embodiment a case where the number of subcarriers used is four has been described as an example, but there is no limit on the number of subcarriers used. Also, in this embodiment a case has been described, as an example, where the number of subcarriers on which an information signal is not superimposed at the time of OFDM signal re-generation is one, but it is also possible for the number of subcarriers on which an information signal is not superimposed to be two or more. In this case, peak power in an OFDM signal can be further suppressed.

In this embodiment, a case has been described, as an example, where, when an OFDM signal is re-generated, subcarriers on which information signal transmission is to be halted are selected sequentially, and an OFDM signal for which peak power does not exceed a threshold value is sent to a D/A converter 110, but the present invention is not limited to this, and it is also possible for OFDM signals re-generated when information signal transmission is halted on each of the subcarriers to be stored, and the OFDM signal with the lowest peak power among the stored OFDM signals to be sent to the D/A converter 110. By this means it is possible to suppress OFDM signal peak power to the utmost, and minimize the effect of linear distortion in a power amplifier.

In above Embodiments 1 through 4, a case has been described where, when peak power still occurs despite OFDM signal re-generation, the OFDM signal for the relevant symbol stored by a peak detector (that is, the initially generated OFDM signal), and not the re-generated OFDM signal for the relevant symbol, undergoes clipping processing by a clipping circuit 109 and is sent to a D/A converter 110. This is because the present inventors have noted that whereas a re-generated OFDM signal is a signal generated with a peak suppression signal or a signal with an amplitude of generally zero, etc., superimposed on a predetermined subcarrier, an OFDM signal for the relevant symbol stored by a peak detector is a signal generated without a peak suppression signal or a signal with an amplitude of generally zero, etc., superimposed. That is to say, the present inventors have noted that a signal resulting from clipping processing of an initially generated OFDM signal is of better quality than a signal resulting from clipping processing of a re-generated OFDM signal. As a result, the quality of a received signal on the receiving apparatus side is good.

In above Embodiment 1 and Embodiment 2, a case has been described, as an example, where, in order to unify the rate of each stream of transmit data input to the IFFT section 106, of the streams of transmit data output from the S/P converter 101, transmit data on which error correction coding is performed is given a low rate. However, if a method is used whereby the transmit data rate does not change after error correction coding (such as a trellis coding modulation method, for example), it is possible for the rates of all the streams of transmit data output from the S/P converter 101 to be made a standard rate.

A transmitting apparatus provided with a multicarrier communication apparatus and a receiving apparatus that performs radio communications with this receiving apparatus described in above Embodiments 1 through 4 can be installed in a communication terminal apparatus or base station apparatus in a digital mobile communication system.

As will be clear to those skilled in the art, the present invention can be implemented using a digital computer or microprocessor available on the general market that is programmed in accordance with the techniques described in the above embodiments. As will be clear to those skilled in the art, the present invention includes a computer program created by a person or persons skilled in the art based on the techniques described in the above-described embodiments.

A computer program product which is a recording medium containing instructions that can be used to program a computer that implements the present invention is included within the scope of the present invention. This recording medium corresponds to a disk such as a floppy disk, optical disk, CD-ROM, or magnetic disk, or ROM, RAM, EPROM, EEPROM, a magneto-optical card, memory card, DVD, or the like, but is not limited to these in particular.

As described above, according to the present invention it is possible to provide a multicarrier communication apparatus that superimposes information signals on all carrier waves when peak power does not occur in a multicarrier signal, and superimposes a signal for suppressing peak power instead of an information signal on a specific carrier wave among all carrier waves when peak power occurs in a multicarrier signal, thereby suppressing peak power while also suppressing a drop in transmission efficiency.

This application is based on Japanese Patent Application No. 2000-158561 filed on May 29, 2000, entire content of which is expressly incorporated by reference herein.

### Industrial Applicability

The present invention is suitable for use in the field of multicarrier transmission method communication apparatuses and more particularly in the field of multicarrier transmission method communication apparatuses that suppress peak power.

## Claims

1. A multicarrier communication apparatus comprising:
converting means for converting a single information signal stream to a plurality of streams of information signals;
generating means for generating a multicarrier signal by superimposing a plurality of streams of information signals respectively on stream-specific carrier waves;
peak power detecting means for detecting peak power of said multicarrier signal; and
re-generating means for, when said peak power exceeds a threshold value, superimposing a signal for suppressing peak power instead of an information signal on a specific carrier wave among said carrier waves and re-generating the multicarrier signal at the time said peak power exceeded the threshold value.

2. The multicarrier communication apparatus according to claim 1, wherein(:) said converting means executes error correction coding processing on an information signal of a predetermined stream among said plurality of streams of information signals; and
said generating means superimposes the information signal of each stream subjected to error correction coding processing on a stream-specific specific carrier wave.

3. The multicarrier communication apparatus according to claim 1, wherein said re-generating means uses at least one carrier wave selected from among all carrier waves as a specific carrier wave.

4. The multicarrier communication apparatus according to claim 1, wherein said re-generating means uses a random signal as a signal for suppressing peak power.

5. The multicarrier communication apparatus according to claim 1 wherein:
said re-generating means uses a signal for which amplitude and phase are limited as a signal for suppressing peak power; and
said re-generating means comprises storing means for storing multicarrier signal generation results computed beforehand, and re-generates a multicarrier signal using said stored generation results.

6. The multicarrier communication apparatus according to claim 1, wherein said re-generating means uses a signal for which amplitude is generally zero as a signal for suppressing peak power.

7. The multicarrier communication apparatus according to claim 1, further comprising clipping means for performing clipping processing on a multicarrier signal for which peak power exceeds a threshold value among multicarrier signals generated by said generating means..

8. A communication terminal apparatus provided with a multicarrier communication apparatus, said multicarrier communication apparatus comprising:
converting means for converting a single information signal stream to a plurality of streams of information signals;
generating means for generating a multicarrier signal by superimposing a plurality of streams of information signals respectively on stream-specific carrier waves;
peak power detecting means for detecting peak power of said multicarrier signal; and
re-generating means for, when said peak power exceeds a threshold value, superimposing a signal for suppressing peak power instead of an information signal on a specific carrier wave among said carrier waves and re-generating the multicarrier signal at the time said peak power exceeded the threshold value.

9. A base station apparatus provided with a multicarrier communication apparatus, said multicarrier communication apparatus comprising:
converting means for converting a single information signal stream to a plurality of streams of information signals;
generating means for generating a multicarrier signal by superimposing a plurality of streams of information signals respectively on stream-specific carrier waves;
peak power detecting means for detecting peak power of said multicarrier signal; and
re-generating means for, when said peak power exceeds a threshold value, superimposing a signal for suppressing peak power instead of an information signal on a specific carrier wave among said carrier waves and re-generating the multicarrier signal at the time said peak power exceeded the threshold value.

10. A multicarrier communication method comprising:
a converting step of converting a single information signal stream to a plurality of streams of information signals;
a generating step of generating a multicarrier signal by superimposing a plurality of streams of information signals respectively on stream-specific carrier waves;
a peak power detecting step of detecting peak power of said multicarrier signal; and
a re-generating step of, when said peak power exceeds a threshold value, superimposing a signal for suppressing peak power instead of an information signal on a specific carrier wave among said carrier waves and re-generating the multicarrier signal at the time said peak power exceeded the threshold value.
